# EUROPÄISCHE PATENTSCHRIFT

(11) **EP 2 731 822 B1**
(45) Veröffentlichungstag und Bekanntmachung des Hinweises auf die Patenterteilung: **12.06.2019**
(21) Anmeldenummer: 12722297.4
(22) Anmeldetag: 16.05.2012
(51) Int. Cl.: B60R 16/023, B60L 58/12

(54) **VERFAHREN ZUR ERMITTLUNG DER RESTREICHWEITE EINES KRAFTFAHRZEUGS**
METHOD FOR DETERMINING THE REMAINING RANGE OF A MOTOR VEHICLE, AND MOTOR VEHICLE
PROCÉDÉ DE DÉTERMINATION DE LA PORTÉE RÉSIDUELLE D'UN VÉHICULE À MOTEUR

(30) Priorität: 16.07.2011 DE 102011107818
(43) Veröffentlichungstag der Anmeldung: 21.05.2014
(73) Patentinhaber: Audi AG, 85045 Ingolstadt (DE)
(72) Erfinder: KLIMESCH, Michael, 85057 Ingolstadt (DE); LAMPRECHT, Andreas, 85055 Ingolstadt (DE); KULNICK, Sascha, 85057 Ingolstadt (DE)
(74) Vertreter: Schuster, Simon
(86) Internationale Anmeldenummer: PCT/EP2012/002092
(87) Internationale Veröffentlichungsnummer: WO 2013/010604

(56) Entgegenhaltungen:
- DE-A1-102009 052 853
- DE-A1-102010 007 851
- US-A1- 2010 138 142

## Beschreibung

Die Erfindung betrifft ein Verfahren zur Ermittlung der Restreichweite eines Kraftfahrzeugs, welches einen Energiespeicher für einen auf wenigstens ein Rad des Kraftfahrzeugs wirkenden Antrieb mit einem Elektromotor aufweist, in Abhängigkeit einer Restenergie in dem Energiespeicher, sowie ein Kraftfahrzeug.

Verfahren zur automatischen Ermittlung einer Restreichweite innerhalb eines Kraftfahrzeugs sind bereits seit längerer Zeit bekannt. Sehr häufig wird dabei mit einem Navigationssystem zusammengewirkt, welches Streckendaten über von dem Kraftfahrzeug zukünftig befahrene Reisestrecken liefert. Abhängig von Verbrauchsbeobachtungen ist es dann möglich, zu prädizieren, wie hoch der Verbrauch auf den verschiedenen zukünftigen Streckenabschnitten sein wird, so dass, wenn die Restenergie bekannt ist, ermittelt werden kann, wie weit das Kraftfahrzeug auf einer solchen Strecke noch fahren kann. Dies kann einem Fahrer zur Anzeige gebracht werden, insbesondere dann, wenn dieser beurteilen möchte, ob er seine Fahrt noch ohne zu Tanken oder auf andere Weise Energie nachzuladen zu Ende bringen kann und in erweiterten Fällen auch, ob die Restenergie sogar noch für eine Rückfahrt auf derselben Strecke ausreicht. Ferner sind Reichweitenberechnungsverfahren bekannt, die auch verschiedene mögliche zukünftige Strecken überprüfen.

Ein Verfahren zur Bestimmung einer zurücklegbaren Restentfernung und eine Anordnung dazu wird durch DE 199 29 426 A1 offenbart. Dabei wird von einem Verbrennungsmotor ausgegangen, so dass die Restenergie einem Betriebsstoffvorrat entspricht. Aus der Betriebsstoffvorratsmenge und einem ermittelten Betriebsstoffverbrauch wird die mit dem Betriebsstoffvorrat zurücklegbare Restentfernung bestimmt, wobei situationsabhängige Verbrauchsmittelwerte verwendet werden. Die Kernidee dort ist es, straßenklassenabhängige Verbrauchsmittelwerte zu bestimmen. Es wird dann überprüft, welcher Straßenklasse ein Streckenabschnitt zugehörig ist, so dass, wenn deren Länge bekannt ist, abhängig von den Verbrauchsmittelwerten ein Verbrauch für den Streckenabschnitt prädiziert werden kann. Auch weitere Klassifizierungen sind dort vorgeschlagen, beispielsweise für den Ladezustand des Fahrzeugs, die Steigung und/oder ein Gefälle eines Streckenabschnitts und dergleichen.

DE 10 2009 052853 A1 offenbart ein Verfahren zur Reichweitenabschätzung. Dabei wird zur Reichweitenabschätzung die Fahrleistung in Form einer maximal zulässigen Fahrgeschwindigkeit und/oder einer maximal zulässigen Beschleunigung und/ oder einer maximalen Leistung für ein Komfortsystem vorgegeben bzw. begrenzt, um zusammen mit diesen Vorgaben, einer noch vorhandenen Energiemenge und einem er-fassten Fahrstraßenprofile eine noch mögliche Reichweite zu errechnen und anzuzeigen. Dabei wird die Begrenzung der Fahrleistung durch einen Fahrer vorgenommen. Als weitere Parameter zur Reichweitenabschätzung werden Fahrzeugeigenschaften berücksichtigt, wobei die Fahrzeugeigenschaften einen Energiebedarf von Komfort-, Assistenz und/oder Sicherheitssystemen umfassen können.

DE 10 2010 007851 A1 offenbart ein Aktualisierungsverfahren zum kontinuierlichen Aktualisieren einer ermittelten Reichweite eines zumindest teilweise elektrisch angetriebenen Kraftfahrzeugs. Die ermittelte Reichweite kann dabei mit einer vorhandenen Energie eines elektrischen Energiespeichers des Kraftfahrzeugs aktuell zurückgelegt werden, wobei das Ermitteln der Reichweite von einer Recheneinheit des Kraftfahrzeugs durchgeführt wird. Diese Ermittlung umfasst ein kontinuierliches Erfassen und Verarbeiten zumindest von Energieparametern des Fahrzeugs, die die Recheneinheit aus einem kommunikativ gekoppelten Fahrzeugbussystem erhält, Routenparametern einer Route zu einem Ziel, die die Recheneinheit von einem kommunikativ gekoppelten Navigationssystem erhält und Fahrweisenparametern, die die Recheneinheit aus einer Speichereinheit ausliest. Die Aktualisierung der ermittelten Reichweite umfasst die Schritte des Erfassens von Betriebsparametern und/oder Betriebszuständen des Energiespeichers durch die Recheneinheit, woraus eine aktuell verfügbare Kapazität des Energiespeichers aus den Betriebsparametern und/oder Betriebszuständen ermittelt wird, die wiederum bei dem Ermitteln der Reichweite durch die Recheneinheit berücksichtigt wird, so dass die Aktualisierung der ermittelten Reichweite in Abhängigkeit der aktuell verfügbaren Kapazität der Energiespeichers bereitgestellt wird.

In letzter Zeit wurden neue Antriebskonzepte für die Serienproduktion vorgeschlagen. Dabei weist der Antrieb des Kraftfahrzeugs einen Elektromotor auf, der beispielsweise aus einer Hochspannungsbatterie des Kraftfahrzeugs gespeist werden kann. Bekannt sind Kraftfahrzeuge, die nur wenigstens einen Elektromotor aufweisen, die häufig auch als Elektrofahrzeuge bezeichnet werden. Vorgeschlagen wurden jedoch auch Kraftfahrzeuge, die sowohl einen Elektromotor als auch einen Verbrennungsmotor als Antriebsmittel umfassen (sogenannte Hybridfahrzeuge). Während bei Kraftfahrzeugen, die nur einen Verbrennungsmotor aufweisen, der Verbrennungsmotor über die Lichtmaschine auch alle neben dem Antrieb vorgesehenen elektrischen Verbraucher (Nebenverbraucher) "mitzieht", ist dies bei einem Elektromotor, der aus einem Speicher für elektrische Energie, insbesondere eine Hochspannungsbatterie, betrieben wird, nicht mehr der Fall, nachdem die Nebenverbraucher auch zum Gesamtverbrauch aus dem elektrischen Energiespeicher beitragen. Bekannte Konzepte zur Berechnung einer Restreichweite berücksichtigen diese Nebenverbraucher nicht ausreichend, um auch bei Betrieb eines Elektromotors hinreichend zuverlässige Aussagen über die Restreichweite zu treffen.

Der Erfindung liegt daher die Aufgabe zugrunde, eine Möglichkeit zur präziseren und differenzierteren Restreichweitenermittlung anzugeben.

Die Aufgabe wird durch das Verfahren in Anspruch 1 gelöst.

Bei Betrieb eines Elektromotors können also die selbst zum Verbrauch beitragenden Nebenverbraucher getrennt berücksichtigt werden, das bedeutet, es wird nicht nur ein (gegebenenfalls für jede Klassifizierung) einzelner Prädiktionswert ermittelt, der den Gesamtverbrauch beschreibt, sondern es werden wenigstens zwei Prädiktionswerte ermittelt, nämlich ein Antriebsprädiktionswert, der sich lediglich auf den Antrieb (konkret den Elektromotor) bezieht, und wenigstens ein Nebenverbraucherprädiktionswert, der einen Verbrauch von Nebenverbrauchern für zukünftige Streckenabschnitte zu prädizieren sucht. Dem liegt die Erkenntnis zugrunde, dass die Verbräuche von Antrieb und Nebenverbrauchern nicht immer korreliert sind und sich daher eine getrennte Betrachtung anbietet, um eine letztlich exaktere und insbesondere differenziertere Berechnung der Restreichweite zu ermöglichen. Es ergibt sich insgesamt ein exakteres Ergebnis. Dabei sei angemerkt, dass das erfindungsgemäße Verfahren selbstverständlich automatisch innerhalb des Kraftfahrzeugs ausgeführt wird, insbesondere durch ein entsprechend ausgebildetes Steuergerät.

Besonders zweckmäßig ist es dabei, wenn der Antriebsprädiktionswert und der Nebenverbraucherprädiktionswert auf unterschiedlichem Berechnungsweg und/oder einem unterschiedlich parametrierten Berechnungsweg ermittelt werden. Das bedeutet also, die differenzierte Betrachtung des Antriebs und der Nebenverbraucher äußert sich auch durch eine unterschiedliche Art der Berechnung der entsprechenden Prädiktionswerte, wobei die Berechnungswege bzw. die Parametrierung speziell abgestimmt auf die Nebenverbraucher und den Antrieb, beispielsweise basierend auf empirischen Untersuchungen, gewählt werden können. So ist es beispielsweise, wenn unterschiedliche Klassen von Umgebungsbedingungen und/oder Streckenabschnitten berücksichtigt werden, denkbar, eine unterschiedliche Klassifizierung für die Antriebsprädiktionswerte und die Nebenverbraucherprädiktionswerte vorzunehmen. Möglich ist es zudem, unterschiedliche Filter oder Filterparameter einzusetzen, worauf im Folgenden noch näher eingegangen werden wird.

So kann der Antriebsprädiktionswert und/oder der Nebenverbraucherprädiktionswert durch eine Filterung des Verlaufs der Verbrauchswerte unter Verwendung wenigstens eines Filters ermittelt werden. Es wird also letztlich der Verlauf der unterschiedlichen Verbrauchswerte betrachtet und analysiert, so dass allein über die Filterwirkung immer eine bestimmte Historie der Verbrauchswerte mit berücksichtigt wird und mithin in die Bestimmung der Prädiktionswerte eingeht, welche dann letztlich - abhängig von den gewählten Filterparametern - neben den aktuellen Verbrauchseigenschaften auch das Verbrauchsverhalten (welches bei den Nebenverbrauchern größtenteils fahrerinitiiert ist) in der näheren Vergangenheit berücksichtigt. Das bedeutet also, die Prädiktionswerte werden kontinuierlich anhand der aktuellen Verbrauchswerte aktualisiert, so dass eine bessere Vorhersage für die zukünftig zu befahrenen Streckenabschnitte gegeben ist.

Dabei sei an dieser Stelle noch angemerkt, dass es allgemein vorteilhaft ist, insbesondere, um Schwankungen der Verbrauchseigenschaften herauszumitteln, die Verbrauchswerte immer über eine (kurze) Strecke gemittelt zu betrachten, beispielsweise also einen Mittelwert über jeweils 100 m zu bilden.

Als besonders geeignete Filter, insbesondere im Hinblick auf den Nebenverbraucherprädiktionswert, haben sich dabei PT-Filter erwiesen, insbesondere PT2-Filter. Selbstverständlich sind auch andere Arten der Filterung denkbar, beispielsweise eine gleitende Mittelwertfilterung oder dergleichen.

In einer Weiterbildung des erfindungsgemäßen Verfahrens kann vorgesehen sein, dass zur Ermittlung des Nebenverbraucherprädiktionswertes zwei Filter verwendet werden, wobei ein erstes Filter eine hohe Dämpfung aufweist und ein zweites Filter eine niedrige Dämpfung aufweist und eine insbesondere gewichtete Kombination der Filterergebnisse erfolgt. Es ist also denkbar, unterschiedliche Filter zu verwenden, um die Ergebnisse dann zu kombinieren. In einer besonders vorteilhaften Ausführungsform der vorliegenden Erfindung kann die Wichtung der Filterergebnisse in Abhängigkeit von der Restenergie erfolgen. Das bedeutet also, es ist möglich, verschiedene Filtercharakteristiken heranzuziehen, die dann in Abhängigkeit von einem Betriebsparameter, konkret beispielsweise der Restenergie, gewichtet werden können.

Selbstverständlich kann auch allgemein bei der Verwendung eines Filters vorgesehen sein, dass wenigstens ein Filterparameter in Abhängigkeit eines auf den Antrieb bezogenen Betriebsparameters des Kraftfahrzeugs, insbesondere von der Restenergie, gewählt wird.

Diesen beiden zuletzt geäußerten, im Hinblick auf den Nebenverbraucherprädiktionswert besonders vorteilhaften Erwägungen - Wichtung der Ergebnisse verschiedener Filter in Abhängigkeit von der Restenergie bzw. Anpassung von Filterparametern in Abhängigkeit eines Betriebsparameters, insbesondere der Restenergie - liegt der Gedanke zugrunde, dass insbesondere die Restenergie ein relevantes Kriterium darstellt, wenn es um den betrachteten Zeitraum bei der Nutzung von Nebenverbrauchern geht. Denn ist die Restenergie bereits niedrig, das bedeutet, ist also auch eine korrespondierende Restreichweite als eher niedrig zu erwarten, haben aktuelle Verbrauchsentwicklungen bei der Nutzung von Nebenverbrauchern einen größeren, relevanteren Einfluss. Wird beispielsweise bei sehr niedriger Restenergie eine Klimaanlage aktiviert, sollte der auf diesen Nebenverbraucher bezogene Prädiktionswert schneller erhöht werden als wenn noch eine relativ hohe Restenergie zur Verfügung steht, nachdem so schnell auf die geänderte, aber hoch relevante Situation reagiert werden kann, da im Beispiel der Klimaanlage diese einen durchaus relevanten Verbraucher darstellt.

In einer besonders bevorzugten Ausführungsform der vorliegenden Erfindung kann vorgesehen sein, dass wenigstens zwei Nebenverbraucherprädiktionswerte für wenigstens eine wenigstens einen Nebenverbraucher umfassende Nebenverbrauchergruppe bestimmt werden. Das bedeutet, auch bezüglich der unterschiedlichen Nebenverbraucher selber ist eine differenziertere Betrachtung möglich, so dass insbesondere auch für solche verschiedenen Nebenverbrauchergruppen gilt, dass die Nebenverbraucherprädiktionswerte verschiedener Nebenverbrauchergruppen auf unterschiedlichen Berechnungswegen und/oder unterschiedlich parametrierten Berechnungswegen ermittelt werden können. Beispielsweise können anders parametrierte Filter für die Ermittlung der Nebenverbraucherprädiktionswerte unterschiedlicher Nebenverbrauchergruppen eingesetzt werden und dergleichen.

So kann beispielsweise vorgesehen sein, dass eine Nebenverbrauchergruppe alle betrachteten, an einem Bordnetz niedriger Spannung angeschlossenen Nebenverbraucher umfasst und eine weitere Nebenverbrauchergruppe wenigstens einen an einem Bordnetz höherer Spannung angeschlossenen Nebenverbraucher umfasst, insbesondere wenigstens einen auf das Temperaturmanagement innerhalb des Kraftfahrzeugs bezogenen Nebenverbraucher. Üblicherweise weisen Kraftfahrzeuge mit einem Elektromotor ein Hochspannungsnetz und ein Niedrigspannungsnetz auf, die über einen DC-DC-Umrichter verbunden sein können. Das Hochspannungsnetz wird von der Hochspannungsbatterie gespeist, welche auch als Energiespeicher für den Elektromotor herangezogen wird. Das Niedrigspannungsnetz kann eine Niedrigspannungsbatterie, beispielsweise mit einer Betriebsspannung von 12 V, aufweisen, wobei selbstverständlich die Hochspannung höher als die Niedrigspannung ist. Denkbar ist es dann also, die Niedrigspannung-Nebenverbraucher und die Hochspannung-Nebenverbraucher separat zu berücksichtigen, so dass eine weitere genauere Differenzierung erfolgen kann und mithin eine präzisere Berechnung der Restreichweite erfolgt. Als Hochspannungs-Nebenverbraucher von merklichem Einfluss, die getrennt betrachtet werden können, sind dabei insbesondere Komponenten einer Klimaanlage zu nennen. Allgemein können auf die Temperaturen im Kraftfahrzeug bezogene Vorrichtungen als Thermomanagement-System zusammengefasst werden.

Es kann ferner vorgesehen sein, dass obere Schranken für die Prädiktionswerte verwendet werden. Derartiges kann sinnvoll sein, um eine Entartung bei verschiedenen Betriebszuständen zu vermeiden.

In weiterer Ausgestaltung der vorliegenden Erfindung kann vorgesehen sein, dass bestimmten Klassen von Streckenabschnitten und/oder Umgebungsbedingungen zugeordnete Antriebsprädiktionswerte und/oder Nebenverbraucherprädiktionswerte ermittelt werden. Dabei kann bezüglich der Antriebsprädiktionswerte beispielsweise das durch die eingangs bereits genannte DE 199 29 426 A1 beschriebene Verfahren genutzt werden, wobei eine Klassifizierung von Streckenabschnitten vorgenommen wird und jeder Klasse ein eigener Prädiktionswert (dort: Verbrauchsmittelwert) zugeordnet wird. Entsprechende Daten, um zu bestimmen, auf welcher Klasse von Streckenabschnitten man sich gerade befindet, können von einem Navigationssystem geliefert werden, beispielsweise eine Straßenklasse, eine Geschwindigkeitsbegrenzung, eine Steigung, ein Kurvenradius, Verkehrsinformationen und dergleichen. Es können dabei auch Klassen für die Nebenverbraucherprädiktionswerte berücksichtigt werden, welche beispielsweise auch im Zusammenhang mit Umgebungsbedingungen stehen können, beispielsweise Wetterbedingungen oder dergleichen.

In weiterer Ausgestaltung der vorliegenden Erfindung kann vorgesehen sein, dass zur Durchführung des Verfahrens ein Steuergerät einer Kombinationsanzeigevorrichtung verwendet wird und/oder die Streckendaten von einem Steuergerät einer Navigationseinrichtung zur Verfügung gestellt werden. Eine Navigationseinrichtung kann ferner auch Informationen zum aktuellen Aufenthaltsort des Kraftfahrzeugs liefern, welcher beispielsweise über Daten eines GPS-Sensors und ein nachfolgendes "Map-Matching" ermittelt werden kann. Streckendaten, gegebenenfalls Daten zur Klassifizierung und die aktuelle Position des Kraftfahrzeugs werden dann dem Steuergerät zur Verfügung gestellt, welches die Restreichweite ermitteln soll. Dabei kann es sich bevorzugt um ein Steuergerät einer Kombinationsanzeigevorrichtung handeln, an der die Restreichweite dann auch dargestellt werden soll. Steuergeräte von Nebenverbrauchern und des Antriebs können die aktuellen Verbrauchswerte liefern, welche beispielsweise durch Auswertung von Messwerten geeigneter Sensoren bestimmt werden können. Die verbleibende Restenergie kann von einem entsprechenden Batteriesteuergerät zur Verfügung gestellt werden, insbesondere von einem Batteriemanagementsystem.

Sind die Prädiktionswerte, beispielsweise als Verbrauch in Kilowattstunden/100 km, erst bekannt, kann in Kenntnis der zukünftig zu befahrenen Strecke anhand der Streckendaten durch eine Summenbildung der Gesamtverbrauch für verschiedene Streckenabschnitte und somit auch die Restreichweite bestimmt werden, wobei gegebenenfalls Klassifizierungen zu beachten sind.

Neben dem Verfahren betrifft die Erfindung auch ein Kraftfahrzeug, aufweisend einen Energiespeicher für einen auf wenigstens ein Rad des Kraftfahrzeugs wirkenden Antrieb mit einem Elektromotor, und ein zur Durchführung des erfindungsgemäßen Verfahrens ausgebildetes Steuergerät. Bei dem Steuergerät kann es sich dabei besonders vorteilhaft um das Steuergerät einer Kombinationsanzeigevorrichtung handeln. Ein Navigationssystem sowie Steuergeräte von Nebenverbrauchern und Antrieb sowie des Energiespeichers können weitere benötigte Informationen liefern, um die Restreichweite zu bestimmen. Sämtliche Ausführungen bezüglich des erfindungsgemäßen Verfahrens gelten analog für das erfindungsgemäße Kraftfahrzeug, mit welchem folglich auch eine differenziertere und folglich präzisere Restreichweitenberechnung möglich ist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: eine Skizze zum Ablauf des erfindungsgemäßen Verfahrens, und
- Fig. 3: verschiedene Filtercharakteristika in Form einer Antwort auf ein Eingangssignal.

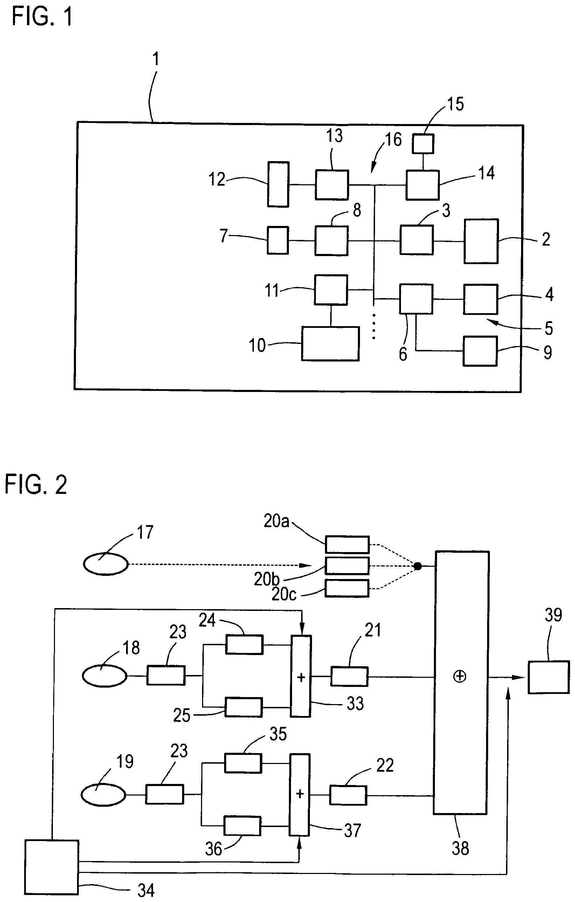

Fig. 1 zeigt eine Prinzipskizze eines erfindungsgemäßen Kraftfahrzeugs 1. Dabei handelt es sich um ein Elektrofahrzeug, dessen Antrieb einen Elektromotor 2 umfasst, dem ein Antriebssteuergerät 3 zugeordnet ist. Über ein aus Übersichtlichkeitsgründen in Fig. 1 nicht näher gezeigtes Hochspannungsnetz wird der Elektromotor 2 von einer Hochspannungsbatterie 4, die einen elektrischen Energiespeicher 5 darstellt, mit Energie versorgt und treibt wenigstens ein Rad des Kraftfahrzeugs 1 an. Auch der Hochspannungsbatterie 4 ist ein Batteriesteuergerät 6 zugeordnet.

Über das Hochspannungsnetz werden auch Komponenten einer Klimaanlage 7 betrieben, der ebenfalls ein Steuergerät 8 zugeordnet ist.

Neben dem Hochspannungsnetz existiert in dem Kraftfahrzeug auch ein Niedrigspannungsnetz, welches ebenso aus Übersichtlichkeitsgründen nicht näher gezeigt ist. Das Niedrigspannungsnetz wird von einer Niedrigspannungsbatterie 9 gespeist, die auch von dem Batteriesteuergerät 6 überwacht wird, welches somit Teil eines Batteriemanagementsystems bildet.

An das Niedrigspannungsnetz sind weitere Nebenverbraucher, also weitere Verbraucher elektrischer Energie neben dem Elektromotor 2 des Antriebs, angeschlossen, wobei rein beispielshalber ein Infotainmentsystem 10 mit zugeordnetem Steuergerät 11 und eine Kombinationsanzeigevorrichtung 12 mit einem zugeordneten Steuergerät 13 gezeigt sind. Ferner ist das Kraftfahrzeug 1 auch mit einem Navigationssystem 14 versehen, welchem ein GPS-Sensor 15 zugeordnet ist. Selbstverständlich sind auch weitere Nebenverbraucher denkbar; es sei jedoch angemerkt, dass auch die Steuergeräte 3, 6, 8, 11, 13 selbst Nebenverbraucher darstellen, die über das Niedrigspannungsnetz betrieben werden.

Die verschiedenen Steuergeräte und Systeme des Kraftfahrzeugs 1 kommunizieren über ein Bussystem 16, hier einen CAN-Bus, wie allgemein bekannt ist.

Vorliegend ist nun das Steuergerät 13 zur Durchführung des erfindungsgemäßen Verfahrens ausgebildet. Hierzu empfängt das Steuergerät 13 verschiedene Daten über das Bussystem 16, konkret Streckendaten über eine zukünftig zu befahrene Strecke und die aktuelle Position des Kraftfahrzeugs 1 von dem Navigationssystem 14, eine Information über die in der Hochspannungsbatterie 4 noch vorhandene Restenergie von dem Batteriesteuergerät 6 sowie Verbrauchswerte des Antriebs und der Nebenverbraucher, beispielsweise von den Steuergeräten 3, 8 und 11.

Die Verbrauchswerte werden dabei über in Fig. 1 nicht näher dargestellte Sensoren bestimmt, beispielsweise, indem Strom und Spannung am Eingang des Nebenverbrauchers bzw. Elektromotors 2 gemessen werden, so dass die Leistungsaufnahme bestimmt werden kann. Es sei an dieser Stelle noch angemerkt, dass die Verbrauchswerte im vorliegenden Ausführungsbeispiel immer über eine Strecke von 100 m gemittelt betrachtet werden, das bedeutet, ein durch das erfindungsgemäße Verfahren verarbeiteter Verbrauchswert bezieht sich auf den Durchschnitt einer 100 m-Strecke.

Die Verbrauchswerte werden erfindungsgemäß genutzt, um Prädiktionswerte für den Verbrauch des Antriebs und der Nebenverbraucher auf einer bestimmten Streckenlänge, vorliegend 100 km, ständig aktuell nachzuführen. Dies sei durch die Darstellung in Fig. 2 näher erläutert.

Dabei sind als Eingangswerte bei 17 die Verbrauchswerte des Antriebs, bei 18 die Verbrauchswerte von Hochspannungsnebenverbrauchern, hier an das Hochspannungsnetz angeschlossener Komponenten der Klimaanlage 7, und bei 19 Verbrauchswerte der übrigen Nebenverbraucher, die an das Niederspannungsnetz angeschlossen sind, gezeigt. Ersichtlich sind die Nebenverbraucher in zwei Nebenverbrauchergruppen eingeteilt, nämlich Hochspannungsnebenverbraucher und Niedrigspannungsnebenverbraucher.

Aus den Verbrauchswerten 17 des Antriebs werden Antriebsprädiktionswerte 20a, 20b und 20c hergeleitet. Dies ist im Stand der Technik bereits bekannt; beispielsweise kann wie in DE 199 29 426 A1 bezüglich der Verbrauchsmittelwerte beschrieben vorgegangen werden. Die Antriebsprädiktionswerte 20a, 20b und 20c sind verschiedenen Klassen von Streckenabschnitten zugeordnet, beispielsweise "Autobahn", "Landstraße" und "Stadtverkehr". Die Daten des Navigationssystems 14 erlauben es, zu ermitteln, welcher Klasse die aktuell aufgenommenen Verbrauchswerte 17 zuzuordnen sind. Es sei an dieser Stelle angemerkt, dass grundsätzlich auch bei der Ermittlung von Nebenverbraucherprädiktionswerten 21, 22, welche separat bestimmt werden, eine derartige Klassifizierung denkbar ist; der Einfachheit halber wird hier jedoch ein Beispiel dargestellt, in dem keine Klassifizierung diesbezüglich vorgenommen wird.

Wesentlich für das erfindungsgemäße Verfahren ist, dass ein anderer Berechnungsweg und/oder ein anders parametrierter Berechnungsweg für die Bestimmung der Nebenverbraucherprädiktionswerte 21, 22 verwendet wird, als für die Bestimmung der Antriebsprädiktionswerte 20a, 20b und 20c. Es können andere Filter bzw. Filtercharakteristika verwendet werden.

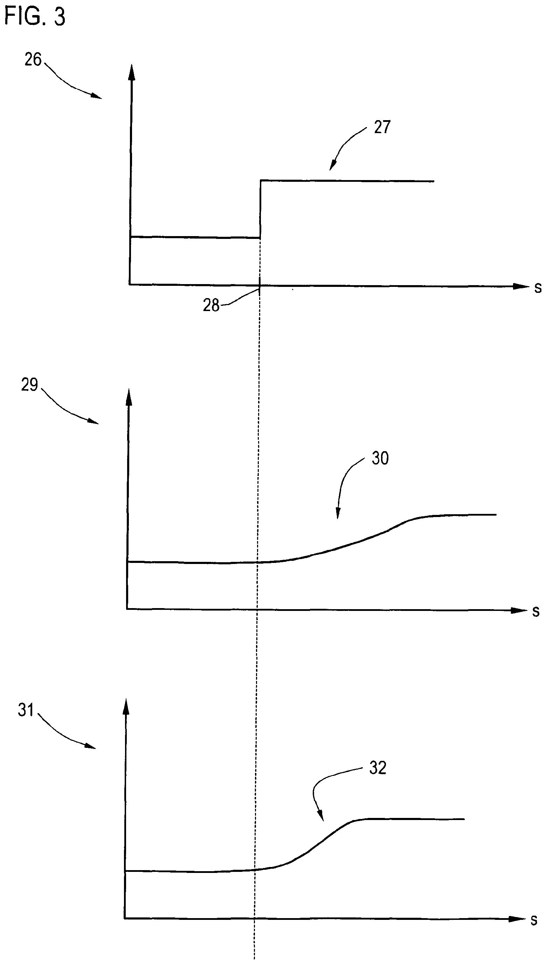

Beispielhaft sei zunächst die Ermittlung des Nebenverbraucherprädiktionswertes 21 für die Nebenverbrauchergruppe der Hochspannungsverbraucher, ausgehend von den Verbrauchswerten 18, näher erläutert. Der Kasten 23 stellt die bereits beschriebene Mittelung über eine bestimmte, kurze Strecke dar, beispielsweise 100 m. Der gemittelte Verbrauchswert 18 wird sodann parallel zwei PT2-Filtern 24, 25 zugeführt. Dabei besitzen die PT2-Filter 24, 25 unterschiedliche Dämpfungskonstanten, wie durch Fig. 3 näher erläutert werden soll.

Dort ist zunächst in einem ersten Graphen 26 ein Verlauf des Verbrauchswertes gegen die zurückgelegte Strecke s gezeigt, mithin ein zeitlicher Verlauf 27.

Ersichtlich ist an einer Stelle 28 ein Sprung im Verbrauch zu verzeichnen, beispielsweise, nachdem ein Fahrer des Kraftfahrzeugs 1 an dieser Stelle 28 die Klimaanlage 7 aktiviert hat.

Der Graph 29 zeigt nun den durch den Filter 24 mit einer hohen Dämpfungskonstante gefilterten Verlauf 30. Ersichtlich zeigt sich die Auswirkung des Sprunges an der Stelle 28 nur äußerst langsam. Im Gegensatz dazu ist im Graphen 31 der durch den Filter 25 mit einer niedrigen Dämpfungskonstante gefilterte Verlauf 32 gezeigt, der dem Originalverlauf 27 deutlich schneller folgt.

Die Ergebnisse der Filterung, welche durch ihre Parametrierung im Übrigen auch definieren, über welche Strecken die historischen Verbrauchswerte 18 eine Auswirkung haben, werden in einem Kombinierer 33 gewichtet addiert. Die Gewichtung erfolgt dabei in Abhängigkeit der Restenergie 34 derart, dass bei niedrigen Restenergien das Ergebnis des Filters 25 relevanter wird, bei hohen Restenergien jedoch das Ergebnis des Filters 24. Dies begründet sich darin, dass bei niedrigen Restenergien 34, mithin bei niedrigen Restreichweiten, auch kurzfristige Verbrauchsänderungen sehr relevant sein können, so dass dann schneller auf sie reagiert werden kann.

Als Ergebnis erhält man dann den ersten Nebenverbraucherprädiktionswert 21, der beispielsweise angeben kann, wie hoch der Energieverbrauch auf 100 km basierend auf dem Verlauf der Verbrauchswerte 18 ist.

Auch für die Gruppe der Niedrigspannungsverbraucher, Verbrauchswerte 19, werden PT2-Filter 35 und 36 eingesetzt, deren Ergebnisse in einem Kombinierer 37 entsprechend kombiniert werden. Allerdings sind die Filter 35 und 36 anders parametriert als die Filter 24 und 25 und auch die Wichtung in Abhängigkeit der Restenergie 34 erfolgt auf andere Weise, das bedeutet, es wird ein anders parametrierter Berechnungsweg verwendet. Es sei jedoch an dieser Stelle auch angemerkt, dass auch unterschiedliche Berechnungswege, beispielsweise die Verwendung unterschiedlicher Filter, gegeben sein können. Weiterhin muss es sich bei den Filtern 24, 25, 35 und 36 nicht um PT2-Filter handeln, sondern es können auch andere Filter verwendet werden, beispielsweise gleitende Mittelwert-Filter. Ein Berechnungsweg, wie er für die Verbraucherprädiktionswerte 21 und 22 gezeigt wurde, kann im Übrigen selbstverständlich auch analog, jedoch anders parametriert, für die Berechnung der Antriebsprädiktionswerte 20a, 20b und 20c verwendet werden.

Sind nun die aktuellen Prädiktionswerte 20a, 20b, 20c, 21 und 22 bekannt, kann durch Addition der entsprechenden Werte für einen Streckenabschnitt, Kombinierer 38, ein Verbrauch für den Streckenabschnitt ermittelt werden, wobei gegebenenfalls dessen Klasse bei der Auswahl des Prädiktionswertes 20a, 20b oder 20c berücksichtigt werden muss. Immer dann, wenn der Verbrauch aufgrund der Prädiktionswerte 20a, 20b, 20c, 21 und 22 für einen Streckenabschnitt vorhergesagt wurde, wird dieser Verbrauch von der Restenergie 34 abgezogen. Ist diese bei einem Streckenabschnitt auf Null gefallen oder gar unter Null, so ist die Restreichweite 39 für die entsprechende Strecke bestimmt. Sie kann dann beispielsweise an der Kombinationsanzeigevorrichtung 12 dargestellt werden.

Es sei schließlich noch angemerkt, dass es vorgesehen sein kann, obere Schranken für die Prädiktionswerte 20a, 20b, 20c, 21 und 22 zu verwenden, um Fehlberechnungen, insbesondere bei wenigen vorliegenden Daten, zu vermeiden. Ferner sei darauf hingewiesen, dass statt der Wichtung in den Kombinierern 33 und 37 alternativ oder zusätzlich auch eine Veränderung der Filterparameter der Filter 25, 24, 35 und 36 in Abhängigkeit der Restenergie 34 erfolgen kann.

## Patentansprüche

1. Verfahren zur Ermittlung der Restreichweite (39) eines Kraftfahrzeugs (1), welches einen Energiespeicher (5) für einen auf wenigstens ein Rad des Kraftfahrzeugs (1) wirkenden Antrieb mit einem Elektromotor (2) aufweist, in Abhängigkeit einer Restenergie (34) in dem Energiespeicher (5),
**dadurch gekennzeichnet, dass**
- den aktuellen Verbrauch des Antriebs und von wenigstens einem Nebenverbraucher beschreibende Verbrauchswerte (17, 18, 19) unter Verwendung wenigstens eines Sensors ermittelt werden,
- aus den Verbrauchswerten (17) des Antriebs wenigstens ein dem Antrieb zugeordneter, den Verbrauch über eine vorbestimmte Strecke beschreibender Antriebsprädiktionswert (20a, 20b, 20c) ermittelt wird und
- aus den Verbrauchswerten (18, 19) der Nebenverbraucher separat wenigstens ein den Nebenverbrauchern zugeordneter, den Verbrauch über eine vorbestimmte Strecke beschreibender Nebenverbraucherprädiktionswert (21, 22) ermittelt wird, und
- für wenigstens eine durch das Kraftfahrzeug (1) zurückzulegende, durch Streckendaten beschriebene Strecke die Restreichweite (32) unter Berücksichtigung des Antriebsprädiktionswerts (20a, 20b, 20c) und des Nebenverbraucherprädiktionswerts (21, 22) bestimmt wird,
- wobei der Antriebsprädiktionswert (20a, 20b, 20c) und der Nebenverbraucherprädiktionswert (21, 22) auf unterschiedlichem Berechnungsweg und/oder einem unterschiedlich parametrierten Berechnungsweg ermittelt werden, und
- wobei der Antriebsprädiktionswert (20a, 20b, 20c) und der Nebenverbraucherprädiktionswert (21, 22) durch eine Filterung des Verlaufes (27) der Verbrauchswerte (17, 18, 19) unter Verwendung wenigstens eines Filters ermittelt werden.

2. Verfahren nach Anspruch 1, **dadurch gekennzeichnet, dass** als Filter wenigstens ein PT-Filter verwendet wird, insbesondere ein PT2-Filter (24, 25, 35, 36).

3. Verfahren nach Anspruch 1 oder 2, **dadurch gekennzeichnet, dass** zur Ermittlung des Nebenverbraucherprädiktionswertes (21, 22) zwei Filter verwendet werden, wobei ein erstes Filter eine hohe Dämpfung aufweist und ein zweites Filter eine niedrige Dämpfung aufweist und eine insbesondere gewichtete Kombination der Filterergebnisse erfolgt.

4. Verfahren nach Anspruch 3, **dadurch gekennzeichnet, dass** die Wichtung der Filterergebnisse in Abhängigkeit von der Restenergie (34) erfolgt.

5. Verfahren nach einem der vorangehenden Ansprüche, **dadurch gekennzeichnet, dass** wenigstens ein Filterparameter in Abhängigkeit eines auf den Antrieb bezogenen Betriebsparameters des Kraftfahrzeugs (1), insbesondere von der Restenergie (34), gewählt wird.

6. Verfahren nach einem der vorangehenden Ansprüche, **dadurch gekennzeichnet, dass** wenigstens zwei Nebenverbraucherprädiktionswerte (21, 22) für jeweils eine wenigstens einen Nebenverbraucher umfassende Nebenverbrauchergruppe bestimmt werden.

7. Verfahren nach Anspruch 6, **dadurch gekennzeichnet, dass** eine Nebenverbrauchergruppe alle betrachteten, an einem Bordnetz niedriger Spannung angeschlossenen Nebenverbraucher umfasst und eine weitere Nebenverbrauchergruppe wenigstens einen an einem Bordnetz höherer Spannung angeschlossenen Nebenverbraucher umfasst, insbesondere wenigstens einen auf das Temperaturmanagement innerhalb des Kraftfahrzeugs (1) bezogenen Nebenverbraucher.

8. Verfahren nach einem der vorangehenden Ansprüche, **dadurch gekennzeichnet, dass** obere Schranken für die Prädiktionswerte (20a, 20b, 20c, 21, 22) verwendet werden.

9. Verfahren nach einem der vorangehenden Ansprüche, **dadurch gekennzeichnet, dass** zur Durchführung des Verfahrens ein Steuergerät (13) einer Kombinationsanzeigevorrichtung (12) verwendet wird und/oder die Streckendaten von einem Steuergerät eines Navigationssystems (14) zur Verfügung gestellt werden.

10. Kraftfahrzeug (1), aufweisend einen Energiespeicher (5) für einen auf wenigstens ein Rad des Kraftfahrzeugs (1) wirkenden Antrieb mit einem Elektromotor (2), und ein zur Durchführung eines Verfahrens nach einem der vorangehenden Ansprüche ausgebildetes Steuergerät (13).

## Claims

1. Method for determining the residual range (39) of a motor vehicle (1) which has an energy storage (5) for a drive with an electric motor (2) which acts on at least one wheel of the motor vehicle (1), as a function of a residual energy (34) in the energy storage (5),
**characterised in that**
- the current consumption of the drive and of at least one secondary consumer describing consumption values (17, 18, 19) are determined using at least one sensor,
- from the consumption values (17) of the drive at least one drive prediction value (20a, 20b, 20c) associated with the drive and describing the consumption over a predetermined distance is determined and
- from the consumption values (18, 19) of the secondary consumer, at least one secondary consumer prediction value (21, 22) associated with the secondary consumers and describing the consumption over a predetermined distance is determined, and
- for at least one route to be travelled by the vehicle (1) and described by the route data, the residual range (32) is determined taking account of the drive prediction value (20a, 20b, 20c) and of the secondary consumer prediction value (21, 22),
- wherein the drive prediction value (20a, 20b, 20c) and the secondary consumer prediction value (21, 22) are determined by a different calculation method and/or a differently parameterised calculation method, and
- wherein the drive prediction value (20a, 20b, 20c) and the secondary consumer prediction value (21, 22) are determined by filtering of the profile (27) of the consumption values (17, 18, 19) using at least one filter.

2. Method according to claim 1, **characterised in that** at least one PT filter is used, in particular a PT2 filter (24, 25, 35, 36).

3. Method according to claim 1 or 2, **characterised in that** for determination of the secondary consumer prediction value (21, 22) two filters are used, wherein a first filter has a high attenuation and a second filter has a low attenuation and an in particular weighted combination of the filter results takes place.

4. Method according to claim 3, **characterised in that** the weighting of the filter results takes place as a function of the residual energy (34).

5. Method according to one of the preceding claims, **characterised in that** at least one filter parameter is selected as a function of an operating parameter of the motor vehicle (1) based on the drive, in particular as a function of the residual energy (34).

6. Method according to one of the preceding claims, **characterised in that** at least two secondary consumer prediction values (21, 22) are determined for a respective secondary consumer group comprising at east one secondary consumer.

7. Method according to claim 6, **characterised in that** a secondary consumer group comprises all considered secondary consumers connected to a low-voltage on-board power supply system and a further secondary consumer group comprises at least one secondary consumer connected to a higher-voltage on-board power supply system, in particular at least one secondary consumer based on the temperature management inside the motor vehicle (1).

8. Method according to one of the preceding claims, **characterised in that** upper thresholds for the prediction values (20a, 20b, 20c, 21, 22) are used.

9. Method according to one of the preceding claims, **characterised in that** for carrying out the method a control device (13) of a combination display device (12) is used and/or the route data are provided by a control device of a navigation system (14).

10. Vehicle (1), comprising an energy storage (5) for a drive acting on at least one wheel of the motor vehicle (1) with an electric motor (2), and a control device (13) configured to carry out a method according to one of the preceding claims.

## Revendications

1. Procédé de détermination de la portée résiduelle (39) d'un véhicule automobile (1) qui présente un accumulateur d'énergie (5) pour un entraînement agissant sur au moins une roue du véhicule automobile (1) avec un moteur électrique (2), en fonction d'une énergie résiduelle (34) dans l'accumulateur d'énergie (5),
**caractérisé en ce que**
- des valeurs de consommation (17, 18, 19) décrivant la consommation actuelle de l'entraînement et d'au moins un consommateur accessoire sont déterminées en utilisant au moins un capteur,
- à partir des valeurs de consommation (17) de l'entraînement au moins une valeur de prédiction d'entraînement (20a, 20b, 20c) décrivant la consommation sur un trajet prédéterminé, associée à l'entraînement est déterminée et
- à partir des valeurs de consommation (18, 19) des consommateurs accessoires séparément au moins une valeur de prédiction de consommateur accessoire (21, 22) associée aux consommateurs accessoires, décrivant la consommation sur un trajet prédéterminé est déterminée, et
- pour au moins un trajet à parcourir par le véhicule automobile (1), décrit par des données de trajet la portée résiduelle (32) est déterminée en tenant compte de la valeur de prédiction d'entraînement (20a, 20b, 20c) et de la valeur de prédiction de consommateur accessoire (21, 22),
- dans lequel la valeur de prédiction d'entraînement (20a, 20b, 20c) et la valeur de prédiction de consommateur accessoire (21, 22) sont déterminées selon une méthode de calcul différente et/ou une méthode de calcul paramétrée différemment, et
- dans lequel la valeur de prédiction d'entraînement (20a, 20b, 20c) et la valeur de prédiction de consommateur accessoire (21, 22) sont déterminées par une filtration de l'étendue (27) des valeurs de consommation (17, 18, 19) en utilisant au moins un filtre.

2. Procédé selon la revendication 1, **caractérisé en ce qu'**en tant que filtre au moins un filtre PT est utilisé, en particulier un filtre PT2 (24, 25, 35, 36).

3. Procédé selon la revendication 1 ou 2, **caractérisé en ce que** pour la détermination de la valeur de prédiction de consommateur accessoire (21, 22) deux filtres sont utilisés, dans lequel un premier filtre présente un amortissement élevé et un second filtre présente un amortissement faible et une combinaison pondérée en particulier des résultats de filtre est effectuée.

4. Procédé selon la revendication 3, **caractérisé en ce que** la pondération des résultats de filtre est effectuée en fonction de l'énergie résiduelle (34).

5. Procédé selon l'une quelconque des revendications précédentes, **caractérisé en ce qu'**au moins un paramètre de filtre est choisi en fonction d'un paramètre de fonctionnement lié à l'entraînement du véhicule automobile (1), en particulier de l'énergie résiduelle (34).

6. Procédé selon l'une quelconque des revendications précédentes, **caractérisé en ce qu'**au moins deux valeurs de prédiction de consommateur accessoire (21, 22) sont déterminées pour respectivement un groupe de consommateurs accessoires comprenant au moins un consommateur accessoire.

7. Procédé selon la revendication 6, **caractérisé en ce qu'**un groupe de consommateurs accessoires comporte tous les consommateurs accessoires considérés, raccordés à un réseau de bord de faible tension et un autre groupe de consommateur accessoire comporte au moins un consommateur accessoire raccordé à un réseau de bord de haute tension, en particulier au moins un consommateur accessoire lié à la gestion de la température dans le véhicule automobile (1).

8. Procédé selon l'une quelconque des revendications précédentes, **caractérisé en ce que** des barrières supérieures sont utilisées pour les valeurs de prédiction (20a, 20b, 20c, 21, 22).

9. Procédé selon l'une quelconque des revendications précédentes, **caractérisé en ce que** pour la réalisation du procédé un appareil de commande (13) d'un dispositif d'affichage de combinaison (12) est utilisé et/ou les données de trajet sont mises à disposition par un appareil de commande d'un système de navigation (14).

10. Véhicule automobile (1), présentant un accumulateur d'énergie (5) pour un entraînement agissant sur au moins une roue du véhicule automobile (1) avec un moteur électrique (2), et un appareil de commande (13) réalisé pour la réalisation d'un procédé selon l'une quelconque des revendications précédentes.
